# EUROPEAN PATENT APPLICATION

(11) **EP 2 958 243 A1**
(43) Date of publication of application: **23.12.2015**
(21) Application number: 14172962.4
(22) Date of filing: 18.06.2014
(51) Int. Cl.: H04B 1/26, H04N 5/50

(54) **Channels receiving apparatus and method thereof**

(71) Applicant: Rafael Microelectronics, Inc., Hsinchu City 300 (TW)
(72) Inventor: Kan, Meng-Ping, 300 Hsinchu City (TW); Hsieh, Chun-An, 111 Taipei City (TW)
(74) Representative: Straus, Alexander

(57) **Abstract**

A channels receiving apparatus (100, 900) includes: a plurality of first modulating devices (102_1-102_m, 902_1-902_m) arranged to receive a receiving signal having a plurality of receiving channels, and to convert a plurality of selected channels from the plurality of receiving channels into a plurality of intermediate channels having a first predetermined frequency according to a plurality of first respective oscillating signals; and a plurality of second modulating devices (106_1-106_m, 906_1-906_m) arranged to convert the plurality of intermediate channels into a plurality of received channels having a second predetermined frequency according to a second respective oscillating signal; wherein the receiving signal has a signal band, the plurality of first oscillating signals have a plurality of respective first frequencies, and the plurality of first frequencies are out of the signal band.

## Description

The present invention is related to a channels receiving apparatus and a method thereof according to the characterizing clauses of claims 1 and 10.

In the field of telecommunication, Data Over Cable Service Interface Specification (DOCSIS) is an international telecommunications standard that permits the addition of high-speed data transfer to an existing cable TV (CATV) system. It is employed by many cable television operators to provide Internet access over their existing hybrid fiber-coaxial (HFC) infrastructure. For example, the DOCSIS 3.0 specification enables cable modems to provide data rates approaching 160 Mb/s downstream and 120 Mb/s upstream. To provide such downstream and upstream data rates, the bandwidth of the transmitted signal conforming to the DOCSIS 3.0 is very wide. For example, the bandwidth of the transmitted signal may be up to 1 GHz, in which many channels are stacked in the transmitted signal. In the user end, a tuner is used to select one or more channels in the transmitted signal. However, the tuner is not easily implemented because of the wide bandwidth of the transmitted signal. Therefore it would be useful to provide a wideband tuner for receiving the channels in the wideband transmitted signal.

This in mind, the present invention aims at providing a channels receiving apparatus and a method for receiving a plurality of channels in a wideband transmitted signal.

This is achieved by a channels receiving apparatus according to claim 1 and a channels receiving method according to claim 10. The dependent claims pertain to corresponding further developments and improvements.

As will be seen more clearly from the detailed description following below, the claimed channels receiving apparatus includes a plurality of first modulating devices and a plurality of second modulating devices. The plurality of first modulating devices are arranged to receive a receiving signal having a plurality of receiving channels, and to convert a plurality of selected channels from the plurality of receiving channels into a plurality of intermediate channels having a first predetermined frequency according to a plurality of respective first oscillating signals. The plurality of second modulating devices are arranged to convert the plurality of intermediate channels into a plurality of received channels having a second predetermined frequency according to a respective second oscillating signal, wherein the receiving signal has a signal band, the plurality of first oscillating signals have a plurality of respective first frequencies, and the plurality of first frequencies are out of the signal band.

Another embodiment of the invention is a method for receiving a plurality of channels in a wideband transmitted signal which includes the step of: receiving a receiving signal having a plurality of receiving channels; converting a plurality of selected channels from the plurality of receiving channels into a plurality of intermediate channels having a first predetermined frequency according to a plurality of first respective oscillating signals; and converting the plurality of intermediate channels into a plurality of received channels having a second predetermined frequency according to a respective second oscillating signal; wherein the receiving signal has a signal band, the plurality of first oscillating signals have a plurality of respective first frequencies, and the plurality of first frequencies are out of the signal band.

In the following, the invention is further illustrated by way of example, taking reference to the accompanying drawings. Thereof
FIG. 1 is a diagram illustrating a channels receiving apparatus according to a first embodiment of the present invention;
FIG. 2 is a diagram illustrating a spectrum of a receiving signal according to an embodiment of the present invention;
FIG. 3 is a diagram illustrating a spectrum of a first oscillating signal and a first output signal when a first receiving channel is selected by a first user according to an embodiment of the present invention;
FIG. 4 is a diagram illustrating a spectrum of an intermediate channel and a second oscillating signal according to an embodiment of the present invention;
FIG. 5 is a diagram illustrating a spectrum of a received channel according to an embodiment of the present invention;
FIG. 6 is a diagram illustrating a spectrum of a first oscillating signal and a first output signal when a second receiving channel is selected by a second user according to an embodiment of the present invention;
FIG. 7 is a diagram illustrating a spectrum of a first oscillating signal and a first output signal when a third receiving channel is selected by a third user according to an embodiment of the present invention;
FIG. 8 is a diagram illustrating a spectrum of a first oscillating signal and a first output signal when a fourth receiving channel is selected by a fourth user according to an embodiment of the present invention;
FIG. 9 is a diagram illustrating a channels receiving apparatus according to a second embodiment of the present invention; and
FIG. 10 is a flowchart illustrating a channels receiving method of a channels receiving apparatus according to an embodiment of the present invention.

Certain terms are used throughout the description and following claims to refer to particular components. As one skilled in the art will appreciate, electronic equipment manufacturers may refer to a component by different names. This document does not intend to distinguish between components that differ in name but not function. In the following description and in the claims, the terms "include" and "comprise" are used in an open-ended fashion, and thus should be interpreted to mean "include, but are not limited to including only ...". Also, the term "couple" is intended to mean either an indirect or direct electrical connection. Accordingly, if one device is coupled to another device, that connection may be through a direct electrical connection, or through an indirect electrical connection via other devices and connections. Within the context of the present invention, the use of respective or respectively indicates that an item within a plurality corresponds to a different specific item in a different plurality.

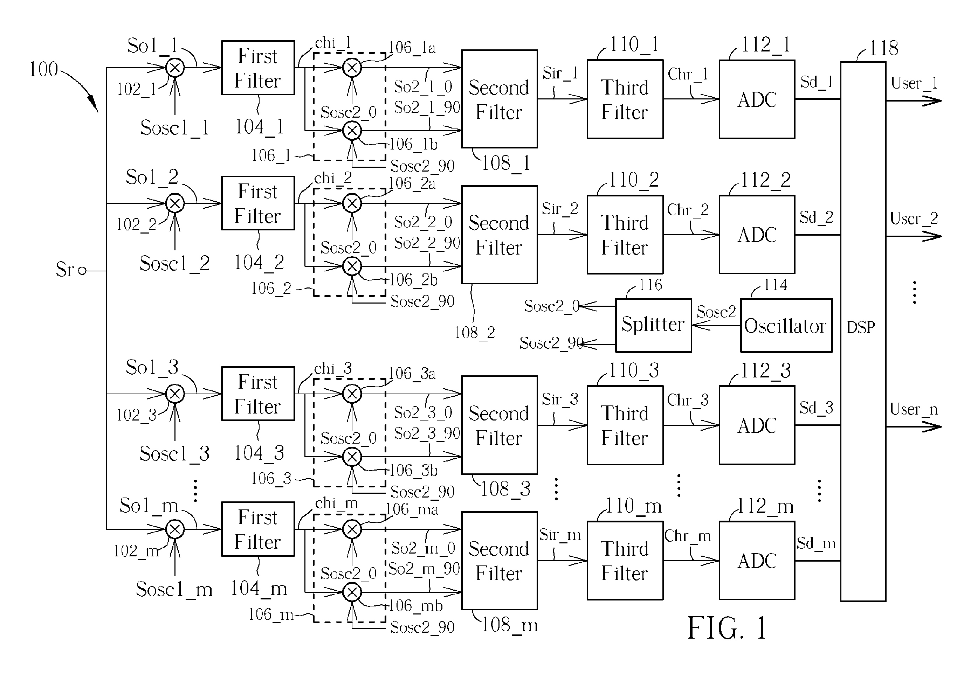

FIG. 1 is a diagram illustrating a channels receiving apparatus 100 according to a first embodiment of the present invention. The channels receiving apparatus 100 comprising a plurality of first modulating devices 102_1-102_m, a plurality of first filters 104_1-104_m, a plurality of second modulating devices 106_1-106_m, a plurality of second filters 108_1-108_m, a plurality of third filters 110_1-110_m, a plurality of analog-to-digital converters (ADC) 112_1-112_m, and a digital signal processor 118. The channels receiving apparatus 100 may be a tuner for receiving a receiving signal Sr conforming to the Data Over Cable

Service Interface Specification (DOCSIS) 3.0. Therefore, the receiving signal Sr may be transmitted on a cable. In this embodiment, the channels receiving apparatus 100 is capable of receiving m channels in the receiving signal Sr at the same time, and m can be any integer number depending on the total channels in the receiving signal Sr. It is noted that the channels receiving apparatus 100 is capable of providing m different channels or the same channel in the receiving signal Sr to m different users respectively.

In this embodiment, the plurality of first modulating devices 102_1-102_m are arranged to receive the receiving signal Sr having a plurality of receiving channels Ch_1-Ch_n, and to convert a plurality of selected channels Chs_1-Chs_m from the plurality of receiving channels Ch_1-Ch_n into a plurality of intermediate channels Chi_1-Chi_m having a first predetermined frequency f1 according to a plurality of first respective oscillating signals Sosc1_1-Sosc1_m. The plurality of first filters 104_1-104_m are coupled to the plurality of first modulating devices 102_1-102_m respectively, for band-pass filtering a plurality of first output signals So1_1-So1_m of the first modulating devices 102_1-102_m to generate the plurality of intermediate channels Chi_1-Chi_m respectively.

The plurality of second modulating devices 106_1-106_m are arranged to convert the plurality of intermediate channels Chi_1-Chi_m into a plurality of received channels Chr_1-Chr_m having a according to a second oscillating signal Sosc2 respectively. The plurality of second filters 108_1-108_m are coupled to the plurality of second modulating devices 106_1-106_m respectively, for filtering images of a plurality of second output signals So2_1-So2_m of the second modulating devices 106_1-106_m to generate a plurality of image-rejected output signals Sir_1-Sir_m respectively. The plurality of third filters 110_1-110_m are coupled to the plurality of second filters 108_1-108_m respectively, for band-pass filtering the plurality of image-rejected output signals Sir_1-Sir_m to generate the plurality of received channels Chr_1-Chr_m respectively. The plurality of analog-to-digital converters 112_1-112_m are coupled to the plurality of third filters 110_1-110_m respectively, for converting the plurality of received channels Chr_1-Chr_m into a plurality of digital signals Sd_1- Sd_m respectively.

According to the present invention, the receiving signal Sr has a signal band Sb, the plurality of first oscillating signals Sosc1_1-Sosc1_m have a plurality of first respective frequencies f1_1-f1_m, and the plurality of first frequencies f1_1-f1_m are out of the signal band Sb of the receiving signal Sr. In other words, the plurality of first frequencies f1_1-f1_m are not overlapped with the signal band Sb of the receiving signal Sr.

In addition, each of the plurality of first modulating devices 102_1-102_m may be a mixer as shown in FIG. 1. Each of the plurality of second modulating devices 106_1-106_M comprises a first mixer and a second mixer. In this embodiment, the first mixer in the second modulating device 106_1 is indicated by 106_1a, and the second mixer in the second modulating device 106_1 is indicated by 106_1 b, and so on. More specifically, take the example of the second modulating device 106_1, the first mixer 106_1 a is coupled to the first filter 104_1, which is coupled to the first modulating device 102_1, for mixing up the intermediate channel Chi_1 with an in-phase oscillating signal Sosc2_0 of the second oscillating signal Sosc2 to generate an in-phase output signal So2_1_0 of the second output signal So2_1. The second mixer 106_1b is also coupled to the first filter 104_1 for mixing up the intermediate channel Chi_1 with a quadrature oscillating signal Sosc2_90 of the second oscillating signal Sosc2 to generate a quadrature output signal So2_1_90 of the second output signal So2_1. As the second modulating devices 106_2-106_m also have the similar characteristics, the detailed description is omitted here for brevity.

According to the embodiment, an oscillator 114 is arranged to generate the second oscillating signal Sosc2, and a splitter 116 is arranged to split the second oscillating signal Sosc2 into the in-phase output signal Sosc2_0 and the quadrature output signal Sosc2_90. However, this is not a limitation of the present invention.

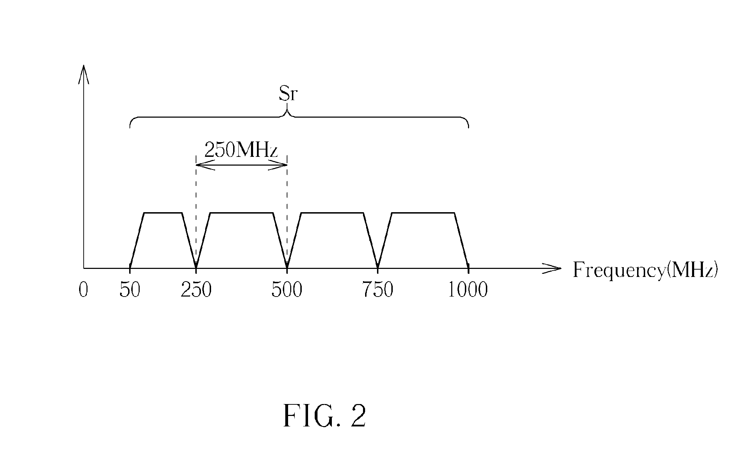

To more clearly illustrate the feature of the presented channels receiving apparatus 100, the detailed description of the channels receiving apparatus 100 in the following paragraphs is demonstrated by assuming the integer m is 4. However, this is not a limitation of the present invention. FIG. 2 is a diagram illustrating a spectrum of the receiving signal Sr according to an embodiment of the present invention. In this embodiment, there has 4 receiving channels Ch_1-Ch_n stacked in the receiving signal Sr, and the bandwidth of each receiving channel is approximately equal to 250 MHz. Thus, the signal band Sb of the receiving signal Sr is approximately equal to 1000 MHz. As the lowest frequency of the receiving signal Sr is approximately equal to zero frequency (i.e. DC), the highest frequency of the receiving signal Sr is also approximately equal to 1000 MHz. Then, the first modulating devices 102_1-102_4 are arranged to up-convert the corresponding receiving channels respectively into a fixed frequency, i.e. the first predetermined frequency f1. In this example, the first predetermined frequency f1 is assumed to be 1150 MHz. For brevity, the lowest frequency of the first receiving channel Ch_1 in FIG. 2 is assumed to be 50 MHz. It should be noted that the lowest frequency of the receiving signal Sr is just approximately equal to zero frequency but not equal to zero frequency.

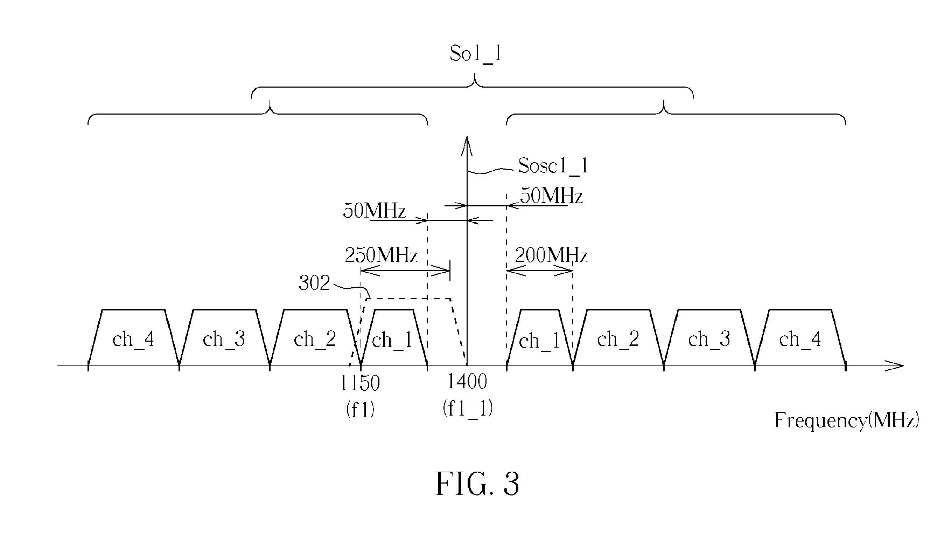

Then, if the first receiving channel Ch_1 is going to be selected by the first user, the first receiving channel Ch_1 is first up-converted to the first predetermined frequency f1 (i.e. 1150 MHz) by the first modulating device 102_1. Therefore, the first frequency f1_1 of the first oscillating signal Sosc1_1 can be set to be 1400 MHz as shown in FIG. 3. FIG. 3 is a diagram illustrating a spectrum of the first oscillating signal Sosc1_1 and the first output signal So1_1 when the first receiving channel Ch_1 is selected by the first user according to an embodiment of the present invention. According to the embodiment, the spectrum of the first output signal So1_1 will comprise two parts, the upper part and the lower part, in which the upper part is located in the right side of the first oscillating signal Sosc1_1 and the lower part is located in the left side of the first oscillating signal Sosc1_1. In this embodiment, the lower part is the wanted signal of the first user while the upper part is the unwanted signal of the first user. Therefore, the upper part can be regarded as the sideband of the wanted signal, and the upper part should be filtered out by the first filter 104_1. After the up-conversion, the first receiving channel Ch_1, which is the wanted channel of the first user, is located in 1150 MHz (i.e. the first predetermined frequency f1).

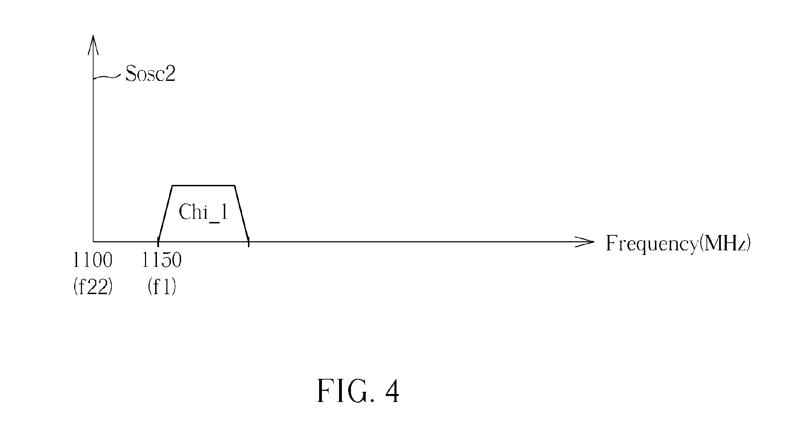

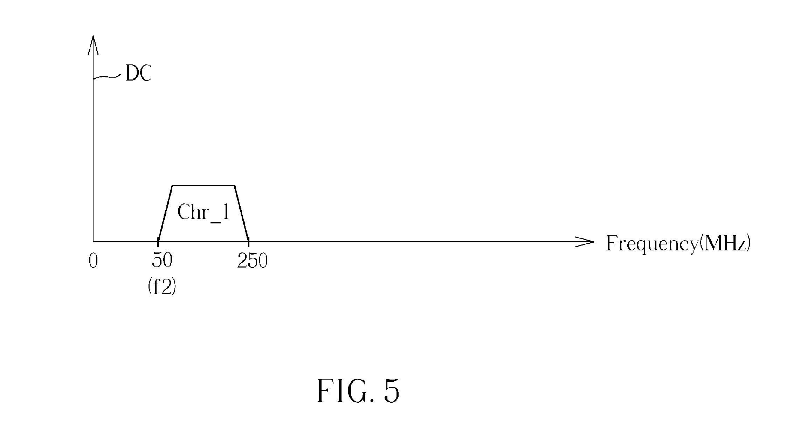

Then, the first output signal So1_1 is passed through the first filter 104_1, which is a band-pass filter, for filtering out the channels other than the first receiving channel Ch_1 as shown in FIG. 3. In FIG. 3, the passing band of the first filter 104_1 is labeled as 302, and the passing band 302 has a bandwidth of at least 250 MHz including the frequency 1150 MHz. Then, the intermediate channel Chi_1 on the frequency 1150 MHz is outputted by the first filter 104_1 as shown in FIG. 4. FIG. 4 is a diagram illustrating a spectrum of the intermediate channel Chi_1 and the second oscillating signal Sosc2 according to an embodiment of the present invention. According to the embodiment, the second frequency f22 of the second oscillating signal Sosc2 is set to be 1100 MHz. Accordingly, the intermediate channel Chi_1 can be down-converted into the frequency of 50 MHz as shown in FIG. 5. FIG. 5 is a diagram illustrating a spectrum of the received channel Chr_1 according to an embodiment of the present invention.

The second modulating device 106_1 in FIG.1 is an I-Q modulator, which comprises two mixers, i.e. 106_1a and 106_1b. The first mixer 106_1a is arranged to down-convert the intermediate channel Chi_1 by the in-phase oscillating signal Sosc2_0 of the second oscillating signal Sosc2 with the frequency 1100 MHz (i.e. f22), and the second mixer 106_1b is arranged to down-convert the intermediate channel Chi_1 by the quadrature oscillating signal Sosc2_90 of the second oscillating signal Sosc2 with the frequency 1100 MHz (i.e. f22). Accordingly, the in-phase output signal So2_1_0 and the quadrature output signal So2_2_90 are generated by the mixers 106_1 a, 106_1 b respectively. It is noted that the in-phase output signal So2_1_0 and the quadrature output signal So2_2_90 can be regarded as the baseband signal at this point.

Then, the second filter 108_1, which is a poly-phase filter, is arranged to filter out the images of the in-phase output signal So2_1_0 and the quadrature output signal So2_2_90 to generate the image-rejected output signal Sir_1. Then, the third filter 110_1, which is a baseband band-pass filter, is arranged to generate the first received channel Chr_1 having the second predetermined frequency f2 (i.e. 50 MHz) as shown in FIG. 5. It is noted that the first received channel Chr_1 is an analog signal. Then, the analog-to-digital converter 112_1 is arranged to converting the first received channel Chr_1 into the first digital signal Sd_1. The first digital signal Sd_1 is then demodulated by the digital signal processor 118. In this embodiment, the analog-to-digital converter 112_1 is a digital tuning analog-to-digital converter. It is noted that the bandwidth of the first received channel Chr_1 is 250 MHz, which means that the first received channel Chr_1 comprises a plurality of different channels and each channel has the bandwidth of 8 MHz. Therefore, the digital signal processor 118 is also arranged to process and select one specific channel in the first received channel Chr_1 for the end user (i.e. User_1).

According to the operation of receiving the first receiving channel Ch_1, it can be seen that the first modulating device 102_1 is arranged to up convert the selected receiving channel into a fixed frequency (i.e. 1150 MHz), and the second modulating device 106_1 is arranged to down convert the intermediate channel into another fixed frequency (i.e. 50 MHz). Therefore, the frequency of the first oscillating signal Sosc1_1 is adjustable, which is depended on the selected receiving channel, and the frequency of the second oscillating signal Sosc2 is a fixed frequency.

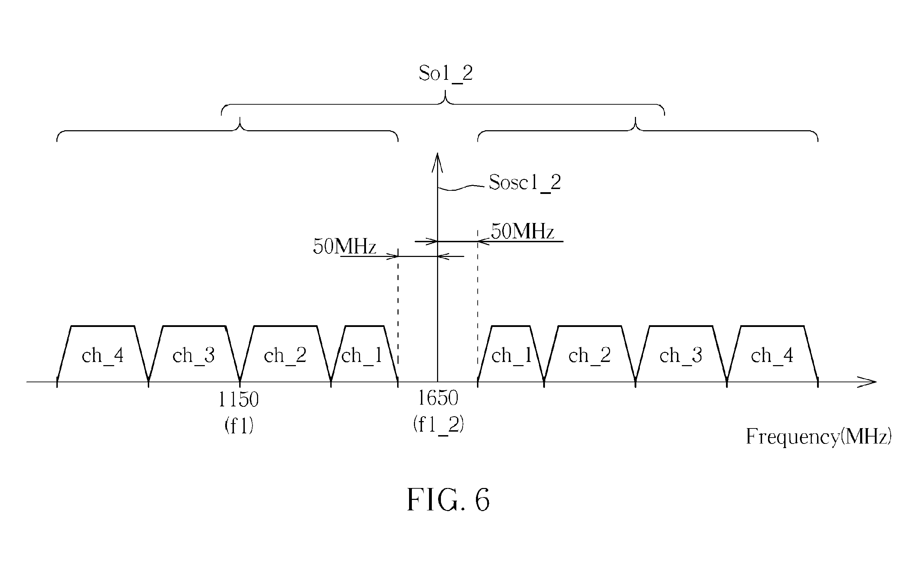

On the other hand, if the second receiving channel Ch_2 is going to be selected by the second user, the second receiving channel Ch_2 is also up-converted to the first predetermined frequency f1 (i.e. 1150 MHz) by the first modulating device 102_2 by setting the first frequency f1_2 of the first oscillating signal Sosc1_2 to be 1650 MHz as shown in FIG. 6. FIG. 6 is a diagram illustrating a spectrum of the first oscillating signal Sosc1_2 and the first output signal So1_2 when the second receiving channel Ch_2 is selected by the second user according to an embodiment of the present invention. Then, the second modulating device 106_2 is arranged to down-convert the intermediate channel Chi_2 with the frequency 1150 MHz into the baseband signal (i.e. the second received channel Chr_2) by the second oscillating signal Sosc2 with the frequency 1100 MHz (i.e. f22).

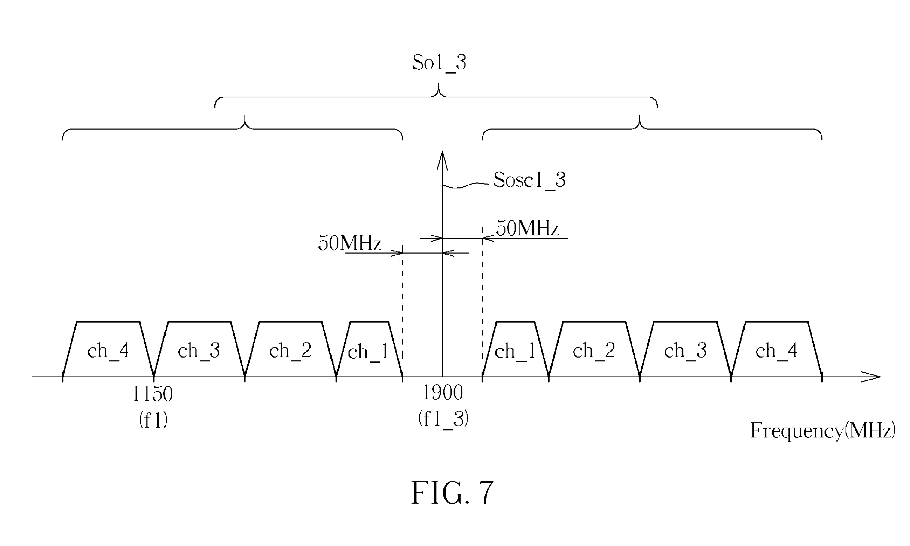

If the third receiving channel Ch_3 is going to be selected by the third user, the third receiving channel Ch_3 is also up-converted to the first predetermined frequency f1 (i.e. 1150 MHz) by the first modulating device 102_3 by setting the first frequency f1_3 of the first oscillating signal Sosc1_3 to be 1900 MHz as shown in FIG. 7. FIG. 7 is a diagram illustrating a spectrum of the first oscillating signal Sosc1_3 and the first output signal So1_3 when the third receiving channel Ch_3 is selected by the third user according to an embodiment of the present invention. Then, the second modulating device 106_3 is arranged to down-convert the intermediate channel Chi_3 with the frequency 1150 MHz into the baseband signal (i.e. the third received channel Chr_3) by the second oscillating signal Sosc2 with the frequency 1100 MHz (i.e. f22).

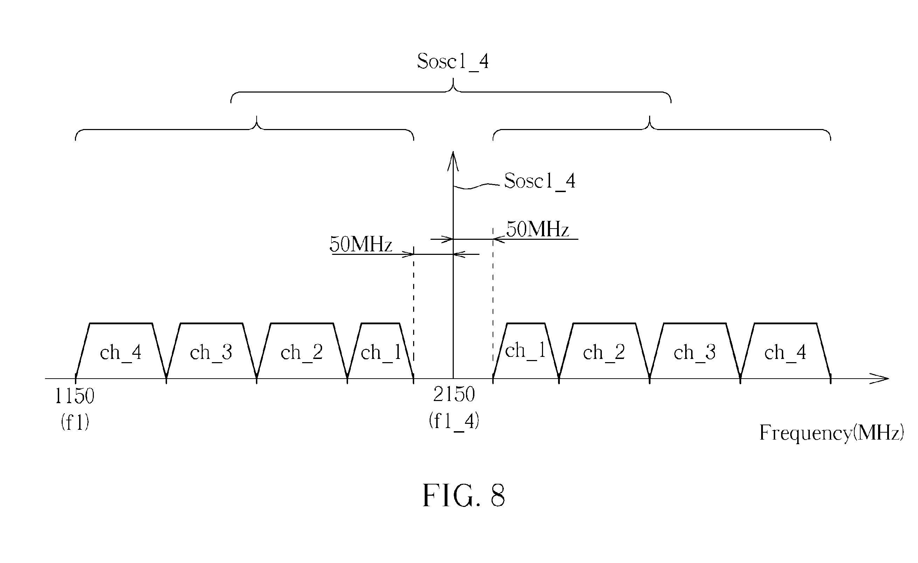

Similarly, if the fourth receiving channel Ch_4 is going to be selected by the fourth user, the fourth receiving channel Ch_4 is also up-converted to the first predetermined frequency f1 (i.e. 1150 MHz) by the first modulating device 102_4 by setting the first frequency f1_4 of the first oscillating signal Sosc1_4 to be 2150 MHz as shown in FIG. 8. FIG. 8 is a diagram illustrating a spectrum of the first oscillating signal Sosc1_4 and the first output signal So1_4 when the fourth receiving channel Ch_4 is selected by the fourth user according to an embodiment of the present invention. Then, the second modulating device 106_4 is arranged to down-convert the intermediate channel Chi_4 with the frequency 1150 MHz into the baseband signal (i.e. the fourth received channel Chr_4) by the second oscillating signal Sosc2 with the frequency 1100 MHz (i.e. f22).

It should be noted that the operations of down-converting the intermediate channels Chi_2-Chi_4 are similar to the operation of down-converting the intermediate channels Chi_1 as shown in FIG. 4, thus the detailed description is omitted here for brevity.

As can be seen from FIG. 3 and FIG. 6-8, the frequencies of the first oscillating signals Sosc1_1-Sosc1_4 are 1400 MHz, 1650 MHz, 1900 MHz, 2150 MHz respectively. Therefore, the frequencies of the first oscillating signals Sosc1_1-Sosc1_4 are not overlapped with the frequency of the receiving signal Sr, which has the highest frequency of 1000 MHz. In other words, the frequencies of the first oscillating signals Sosc1_1-Sosc1_4 are all out of the signal band of the receiving signal Sr. More specifically, the frequencies of the first oscillating signals Sosc1_1-Sosc1_4 are at least one bandwidth (i.e. the bandwidth 250 MHz of one receiving channel) higher than the first predetermined frequency f1. The higher channel in the receiving signal Sr is to be received, the higher frequency of the first oscillating signal is to be set as shown in FIG. 3 and FIG. 6-8. Therefore, the first oscillating signals Sosc1_1-Sosc1_4 will not interfere with the receiving signal Sr no matter which channel is received. It should be noted that the first oscillating signals Sosc1_1-Sosc1_4 may be generated by four different synthesizers respectively.

Moreover, as the second modulating devices 106_1-106_4 use the same oscillating signal (i.e. the second oscillating signal Sosc2) to down-convert the intermediate channels Chi_1-Chi_4 respectively, only one oscillator (i.e. oscillator 114) is used to generate the oscillating signal. Therefore, the design of the second modulating devices 106_1-106_4 can be simplified.

In addition, as the analog-to-digital converters 112_1-112_4 are four separated analog-to-digital converters and each analog-to-digital converter operates under the bandwidth of 250 MHz, the design of each analog-to-digital converter is simple in comparison with the conventional counterpart that using only one analog-to-digital converter that operates under the bandwidth of 1000 MHz.

It should be noted that, according to the above embodiment, the plurality of digital signals Sd_1- Sd_m (each having bandwidth of 250 MHz) are processed and demodulated by the digital signal processor 118 for selecting a plurality of specific channels (each having bandwidth of 8 MHz) to the user_1-user_n respectively. The digital signal processor 118 may use a channel filter to select a specific channel in a digital signal for an end user. Therefore, the channels receiving apparatus 100 applies the idea of "broadband capture" to receive the receiving signal Sr. By using the idea of "broadband capture", the number (i.e. m) of receivers of the channels receiving apparatus 100 can be reduced. For example, only four receivers (i.e. m=4) are enough to receive the receiving signal Sr having bandwidth of 1000 MHz because each receiver is responsible to receive 250 MHz in the receiving signal Sr.

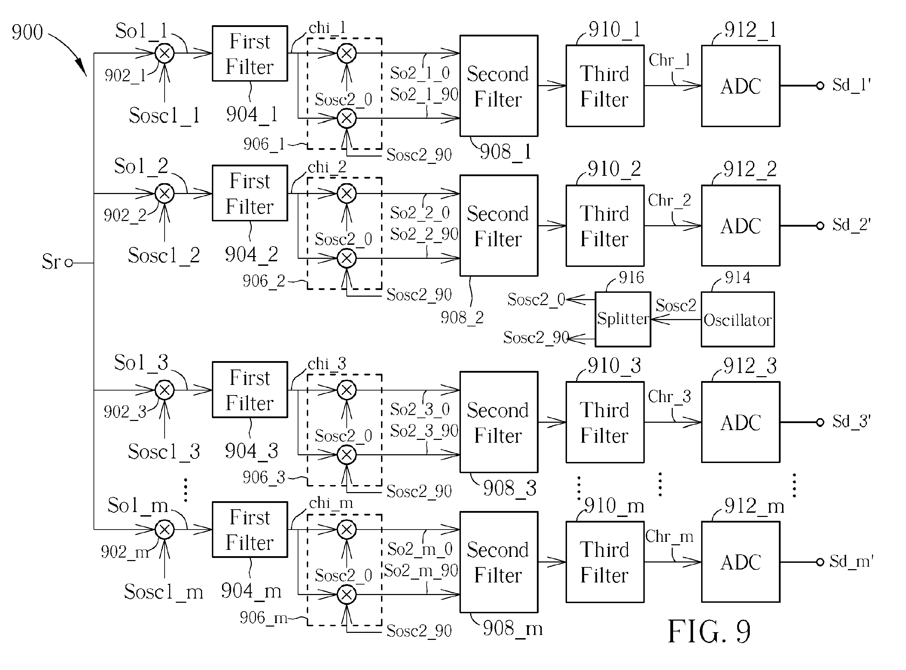

However, this is not a limitation of the present invention. The present idea can also be arranged to just receive one channel having bandwidth of 8 MHz by one receiver as shown in FIG. 9, FIG. 9 is a diagram illustrating a channels receiving apparatus 900 according to a second embodiment of the present invention. The channels receiving apparatus 900 comprising a plurality of first modulating devices 902_1-902_m, a plurality of first filters 904_1-904_m, a plurality of second modulating devices 906_1-906_m, a plurality of second filters 908_1-908_m, a plurality of third filters 910_1-910_m, a plurality of analog-to-digital converters (ADC) 912_1-912_m, an oscillator 914, and a splitter 916. In comparison to the first embodiment (i.e. the channels receiving apparatus 100), the digital signal processor 118 is not applied in the channels receiving apparatus 900 because each receiver (e.g. the circuit comprising the first modulating device 902_1, the first filter 904_1, the second modulating device 906_1, the second filter 908_1, the third filter 910_1, and the ADC 912_1) in the channels receiving apparatus 900 is already to deal with 8 MHz channel.

More specifically, for the second embodiment (i.e. the channels receiving apparatus 900), the first recever (i.e. the circuit comprising the first modulating device 902_1, the first filter 904_1, the second modulating device 906_1, the second filter 908_1, the third filter 910_1, and the ADC 912_1) is used to receive only one channel in the receiving signal Sr, in which the bandwidth of one channel is 8 MHz. Therefore, the bandwidth of each of the plurality of first filters 904_1-904_m can be designed to have 8 MHz and the bandwidth of each of the plurality of third filters 910_1-910_m can also be designed to have 8 MHz. Accordingly, the digital signal Sd_1' can be directed transmitted to the end user. In this embodiment, the number (i.e. m') of the receivers in the channels receiving apparatus 900 is more than the number (i.e. m) of the receivers in the channels receiving apparatus 100 because each receiver in the channels receiving apparatus 900 is responsible to receive one channel in the receiving signal Sr but each receiver in the channels receiving apparatus 100 is responsible to receive a plurality of channels in the receiving signal Sr.

It is noted that the operations of the plurality of first modulating devices 902_1-902_m, the plurality of first filters 904_1-904_m, the plurality of second modulating devices 906_1-906_m, the plurality of second filters 908_1-908_m, the plurality of third filters 910_1-910_m, the plurality of ADC 912_1-912_m, the oscillator 914, and the splitter 916 of the channels receiving apparatus 900 are similar to the operations of the plurality of first modulating devices 102_1-102_m, the plurality of first filters 104_1-104_m, the plurality of second modulating devices 106_1-106_m, the plurality of second filters 108_1-108_m, the plurality of third filters 110_1-110_m, the plurality of ADC 112_1-112_m, the oscillator 114, and the splitter 116 of the channels receiving apparatus 100 respectively, thus the detailed description is omitted here for brevity.

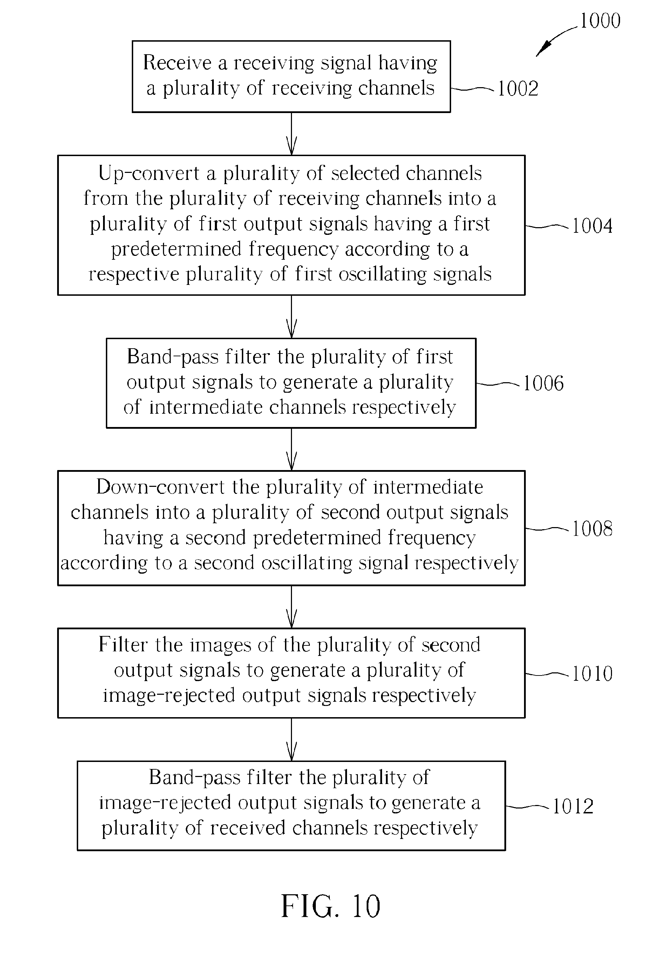

Accordingly, the operation of the channels receiving apparatus 100 can be summarized into the steps as shown in FIG. 10. FIG. 10 is a flowchart illustrating a channels receiving method 1000 of the channels receiving apparatus 100 according to an embodiment of the present invention. Provided that substantially the same result is achieved, the steps of the flowchart shown in FIG. 10 need not be in the exact order shown and need not be contiguous, that is, other steps can be intermediate. The channels receiving method 1000 comprises of the following steps:
Step 1002: Receive the receiving signal Sr having the plurality of receiving channels Ch_1-Ch_n;
Step 1004: Up-convert the plurality of selected channels Chs_1-Chs_m from the plurality of receiving channels Ch_1-Ch_n into the plurality of first output signals So1_1-So1_m having the first predetermined frequency f1 according to the plurality of first respective oscillating signals Sosc1_1-Sosc1_m;
Step 1006: Band-pass filter the plurality of first output signals So1_1-So1_m to generate the plurality of intermediate channels Chi_1-Chi_m respectively;
Step 1008: Down-convert the plurality of intermediate channels Chi_1-Chi_m into the plurality of second output signals So2_1-So2_m having the second predetermined frequency f2 according to the second oscillating signal Sosc2 respectively;
Step 1010: Filter the images of the plurality of second output signals So2_1-So2_m to generate the plurality of image-rejected output signals Sir_1-Sir_m respectively; and
Step 1012: Band-pass filter the plurality of image-rejected output signals Sir_1-Sir_m to generate the plurality of received channels Chr_1-Chr_m respectively.

It is noted that the plurality of first frequencies f1_1-f1_m of the plurality of first oscillating signals Sosc1_1-Sosc1_m are out of the signal band Sb of the receiving signal Sr, and the plurality of first frequencies f1_1-f1_m are depended on the plurality of selected channels Chs_1-Chs_m respectively. The frequency of the second oscillating signal Sosc2 is a fixed frequency.

Briefly, the present invention is arranged to first up-convert the plurality of selected channels Chs_1-Chs_m into the plurality of intermediate channels Chi_1-Chi_m by using the plurality of first oscillating signals Sosc1_1-Sosc1_m respectively, in which the plurality of first frequencies f1_1-f1_m of the plurality of first oscillating signals Sosc1_1-Sosc1_m are out of the signal band Sb of the receiving signal Sr. Then, the present invention is arranged to down-convert the plurality of intermediate channels Chi_1-Chi_m into the plurality of received channels Chr_1-Chr_m respectively by using the second oscillating signal Sosc2, in which the plurality of received channels Chr_1-Chr_m are baseband signals. By doing this, the first oscillating signals Sosc1_1-Sosc1_m will not interfere with the receiving signal Sr, and the design of the second modulating devices 106_1-106_m is simple.

All combinations and sub-combinations of the above-described features also belong to the invention.

## Claims

1. A channels receiving apparatus (100, 900), **characterized by**:
a plurality of first modulating devices (102_1-102_m, 902_1-902_m), arranged to receive a receiving signal having a plurality of receiving channels, and to convert a plurality of selected channels from the plurality of receiving channels into a plurality of intermediate channels having a first predetermined frequency according to a respective plurality of first oscillating signals; and
a plurality of second modulating devices (106_1-106_m, 906_1-906_m), arranged to convert the plurality of intermediate channels into a plurality of received channels having a second predetermined frequency according to a respective second oscillating signal;
wherein the receiving signal has a signal band, the plurality of first oscillating signals have a plurality of respective first frequencies, and the plurality of first frequencies are out of the signal band.

2. The channels receiving apparatus (100, 900) of claim 1, **characterized in that** the plurality of first frequencies are frequencies different with respect to each other.

3. The channels receiving apparatus (100, 900) of claim 1 or 2, further **characterized by**:
a plurality of analog-to-digital converters (112_1-112_m, 912_1-912_m), coupled to the plurality of second modulating devices (106_1-106_m, 906_1-906_m) respectively, for converting the plurality of received channels into a plurality of digital signals respectively.

4. The channels receiving apparatus (100, 900) of any of claims 1-3, **characterized in that** the first predetermined frequency is higher than the second predetermined frequency and the plurality of first modulating devices (102_1-102_m, 902_1-902_m) are arranged to up-convert the plurality of selected channels into the plurality of intermediate channels and the plurality of second modulating devices (106_1-106_m, 906_1-906_m) are arranged to down-convert the plurality of intermediate channels into the plurality of received channels.

5. The channels receiving apparatus (100, 900) of any of claims 1-4, **characterized in that** the plurality of received channels are baseband signals.

6. The channels receiving apparatus (100, 900) of any of claims 1-5, **characterized in that** the lowest frequency in the plurality of first frequencies is higher than the highest frequency of the signal band.

7. The channels receiving apparatus (100, 900) of any of claims 1-6, further **characterized by**:
a plurality of first filters (104_1-104_m, 904_1-904_m), coupled to the plurality of first modulating devices (102_1-102_m, 902_1-902_m) respectively, wherein the plurality of intermediate channels are generated by band-pass filtering a respective plurality of first output signals of the first modulating devices (102_1-102_m, 902_1-902_m);
a plurality of second filters (108_1-108_m, 908_1-908_m), coupled to the plurality of second modulating devices (106_1-106_m, 906_1-906_m) respectively, for filtering images of a plurality of second output signals of the second modulating devices (106_1-106_m, 906_1-906_m) to generate a plurality of image-rejected output signals respectively; and
a plurality of third filters (110_1-110_m, 910_1-910_m), coupled to the plurality of second filters (108_1-108_m, 908_1-908_m) respectively, wherein the respective plurality of received channels are generated by band-pass filtering the plurality of image-rejected output signals.

8. The channels receiving apparatus (100, 900) of claim 7, **characterized in that** each of the plurality of second modulating devices (106_1-106_m, 906_1-906_m) comprises:
a first mixer (106_1a-106_ma), coupled to a corresponding first modulating device of the plurality of first modulating devices (102_1-102_m , 902_1-902_m), for mixing up a corresponding intermediate channel of the plurality of intermediate channels with an in-phase oscillating signal of the second oscillating signal to generate an in-phase output signal of a corresponding second output signal from the plurality of second output signals; and
a second mixer (106_1b-106_mb), coupled to the corresponding first modulating device of the plurality of first modulating devices (102_1-102_m , 902_1-902_m), for mixing up the corresponding intermediate channel of the plurality of intermediate channels with a quadrature oscillating signal of the second oscillating signal to generate a quadrature output signal of the corresponding second output signal from the plurality of second output signals.

9. The channels receiving apparatus (100, 900) of claim 8, further **characterized by**:
an oscillator (114, 914), arranged to generate the second oscillating signal; and
a splitter (116, 916), arranged to split the second oscillating signal into the in-phase output signal and the quadrature output signal.

10. A method for receiving a plurality of channels in a wideband transmitted signal, **characterized by**:
receiving a receiving signal having a plurality of receiving channels;
converting a plurality of selected channels from the plurality of receiving channels into a plurality of intermediate channels having a first predetermined frequency according to a respective plurality of first oscillating signals ; and
converting the plurality of intermediate channels into a plurality of received channels having a second predetermined frequency according to a respective second oscillating signal;
wherein the receiving signal has a signal band, the plurality of first oscillating signals have a plurality of respective first frequencies, and the plurality of first frequencies are out of the signal band.

11. The method of claim 10, **characterized in that** the plurality of first frequencies are frequencies different with respect to each other.

12. The method of claim 10 or 11, further **characterized by**:
converting the plurality of received channels into a plurality of digital signals respectively.

13. The method of any of claims 10-12, **characterized in that** a respective plurality of first output signals are generated by converting the plurality of selected channels according to the plurality of first oscillating signals, and a respective plurality of second output signals are generated by converting the plurality of intermediate channels according to the second oscillating signal, and the method further comprises:
band-pass filtering the plurality of first output signals to generate the plurality of intermediate channels respectively;
filtering images of the plurality of second output signals to generate a plurality of image-rejected output signals respectively; and
band-pass filtering the plurality of image-rejected output signals to generate the plurality of received channels respectively.

14. The method of claim 13, **characterized in that** each of the steps of converting the plurality of intermediate channels into the respective plurality of second output signals according to the second oscillating signal comprises:
mixing up a corresponding intermediate channel of the plurality of intermediate channels with an in-phase oscillating signal of the second oscillating signal to generate an in-phase output signal of a corresponding second output signal from the plurality of second output signals; and
mixing up the corresponding intermediate channel of the plurality of intermediate channels with a quadrature oscillating signal of the second oscillating signal to generate a quadrature output signal of the corresponding second output signal from the plurality of second output signals.

15. The channels receiving method of claim 14, further **characterized by**:
using an oscillator to generate the second oscillating signal; and
splitting the second oscillating signal into the in-phase output signal and the quadrature output signal.
